# FASCICULE DE BREVET EUROPEEN

(11) **EP 0 895 328 B1**
(45) Date de publication et mention de la délivrance du brevet: **23.04.2003**
(21) Numéro de dépôt: 98401682.4
(22) Date de dépôt: 03.07.1998
(51) Int. Cl.: H02G 3/08

(54) **Boite industrielle pour éléments électriques**
Industrielle dose fur elektrische Bauelemente
Industrial box for electrical elements

(30) Priorité: 31.07.1997 FR 9709937
(43) Date de publication de la demande: 03.02.1999
(73) Titulaire: Schneider Electric Industries SAS, 92500 Rueil-Malmaison (FR)
(72) Inventeur: Kaczmarek, Stéphane, 67260 Schopperten (FR); Ritter, Michel, 57405 Arzviller (FR); Tabourin, Daniel, 69890 La Tour de Salvagny (FR)

(56) Documents cités:
- EP-A- 0 411 226
- DE-U- 1 812 666

## Description

La présente invention concerne une boîte industrielle pour éléments électriques, tels qu'appareils électriques ou éléments de liaison ou de connexion électrique, comprenant un fond et des parois latérales offrant un bord antérieur et des bords latéraux, ainsi que des pièces d'angle destinées à joindre les parois latérales de façon étanche et disposées sur leurs bords latéraux mutuellement en regard.

Il est connu d'après le brevet FR- 2 628 903 de réaliser une boîte industrielle de distribution électrique à l'aide d'un fond, de parois latérales conformées pour laisser libres les coins de la boîte et de pièces d'angle propres à s'engager dans des rainures des parois latérales pour les joindre de manière étanche.

La réalisation d'une telle boîte nécessite une bonne précision d'ajustage et des moyens d'assemblage et d'étanchéité relativement coûteux.

L'invention a pour but de simplifier la fabrication d'une boîte industrielle du type décrit, tout en conservant une très bonne tenue mécanique des pièces d'angle.

Selon l'invention, les bords latéraux mutuellement en regard des parois latérales sont rabattus par rapport aux plans de ces parois et les pièces d'angle sont surmoulées sur les bords rabattus, ceux-ci présentant des conformations qui permettent aux pièces d'angle de résister aux efforts d'extraction vers l'extérieur.

Il est avantageux que les conformations de résistance aux efforts ménagées dans les bords rabattus des parois latérales soient des ouvertures et que les pièces d'angle surmoulées comportent une partie externe à la boîte, une partie interne à la boîte et des liaisons pénétrant dans les ouvertures et solidarisant la partie externe avec la partie interne. De préférence, les bords en regard des parois latérales sont rabattus à 45° et la section droite des pièces d'angle a une forme générale triangulaire.

De plus, pour accroître la résistance aux efforts, les parois latérales peuvent venir d'une pièce avec le fond de la boîte, le fond présentant aux coins une languette également munie d'ouvertures pour le passage de la matière moulée de la pièce d'angle.
Pour recevoir des pièces de fixation, les pièces d'angle comprennent de préférence une rainure sensiblement parallèle aux bords rabattus des parois latérales, située du côté extérieur de ces bords, la rainure et la pièce de fixation comportant des moyens de blocage qui autorisent un logement repositionnable de la pièce de fixation dans la rainure.

La description va être faite d'un mode de réalisation non limitatif de l'invention, en regard des dessins annexés.

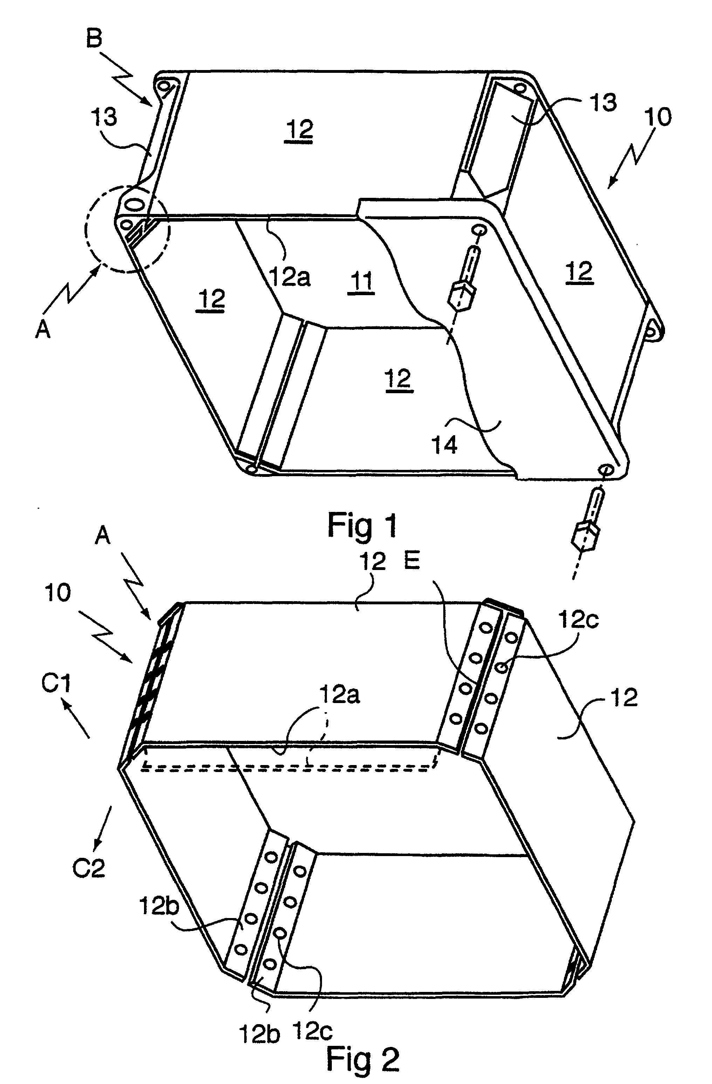

La figure 1 représente en perspective une boîte industrielle conforme à l'invention.

La figure 2 représente en perspective l'enveloppe de la boîte avant surmoulage des pièces d'angle.

La figure 3 représente une partie du flan de tôle dont on part pour réaliser la boîte.

La figure 4 est une vue en élévation latérale de la boîte.

La figure 5 montre à plus grande échelle le détail A de la figure 1.

La figure 6 est une vue de la pièce d'angle en coupe selon le plan V-V de la figure 5.

La boîte industrielle 10 représentée sur les figures est destinée à loger des éléments électriques tels que des appareils électriques, des conducteurs, des organes de connexion, etc.. dans un but de distribution d'énergie électrique ou de commande. Elle comprend un fond plan 11, quatre parois latérales 12 perpendiculaires au fond, autant de pièces d'angle 13 pour joindre les parois latérales entre elles aux coins B de la boîte et un couvercle 14 monté fixe ou pivotant sur les pièces d'angle et parallèle au fond 11 en position de fermeture. La boîte est réalisée par découpe et pliage d'une feuille de matériau quelconque se prêtant à un tel processus ; il peut s'agir par exemple d'une tôle métallique, notamment en acier, acier inoxydable, aluminium, ou d'une tôle en matière plastique.

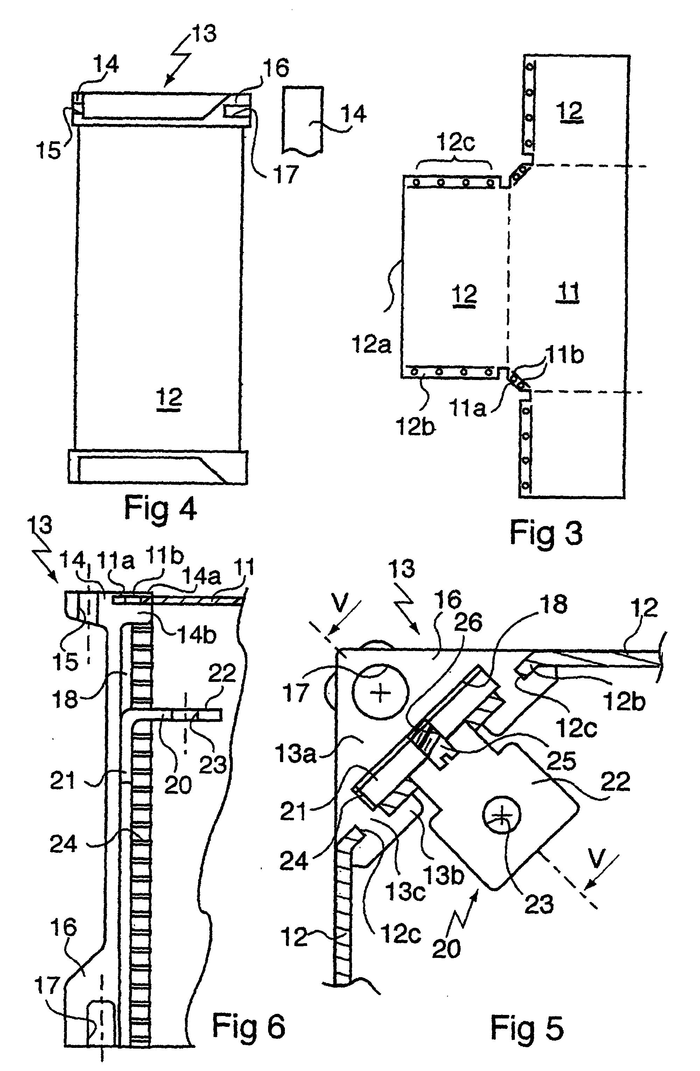

Chaque paroi latérale 12 présente un bord antérieur 12a prévu pour recevoir de manière étanche le couvercle. Ce bord peut être simple, comme indiqué sur les figures en traits pleins, ou peut former une gouttière, comme indiqué en tirets sur la figure 2.

La paroi latérale 12 présente aussi des bords latéraux 12b rabattus par rapport à son plan ; ce rabattement peut être effectué à 45° comme représenté ou peut consister en un pli perpendiculaire au plan de la paroi latérale ou, dans un autre mode d'exécution, en plusieurs plis successifs perpendiculaires ou inclinés. Les bords 12b en regard de deux parois latérales adjacentes 12 laissent entre eux un espace continu E qui sert notamment au passage des pièces de fixation décrites plus plain ; cet espace pourrait aussi être discontinu.

Il est important que les bords rabattus 12b soient conformés, par leurs plis, par des ergots, orifices ou d'autres éléments analogues, de manière que les pièces d'angle qui vont être décrites plus loin résistent aux efforts d'extraction, notamment vers l'extérieur de la boîte, par exemple selon la flèche C1 dirigée radialement depuis le centre de la boîte, ou selon la flèche C2 dans la direction d'extension des bords 12b (voir figure 2). Pour cela, les bords 12b possèdent dans l'exemple décrit des ouvertures 12c traversées par la matière surmoulée.

Chaque pièce d'angle 13 est surmoulée dans un coin B sur les bords rabattus 12b de manière à les envelopper tout en ménageant via les ouvertures 12c des liens de matière 13c entre une partie 13a de la pièce d'angle qui est située vers l'extérieur de la boîte et une partie 13b située vers l'intérieur de la boîte. La pièce en matière plastique 13 a une section droite sensiblement triangulaire pour se situer dans la continuité des parois latérales 12 et présente un talon arrière 14 muni d'un orifice 15 servant à fixer la boîte à un support, une saillie antérieure 16 munie d'un orifice 17 servant à fixer un couvercle et une rainure 18 qui s'étend sensiblement sur toute sa longueur et selon la direction du bord 12b pour loger une pièce de fixation repositionnable 20. Un orifice 19 peut être prévu pour loger une pièce de charnière d'un couvercle pivotant.

La pièce de fixation doit permettre de fixer dans la boîte des profilés, platines ou autres organes analogues de montage d'appareils ou d'auxiliaires. La pièce 20 représentée a la forme d'une équerre comprenant une aile 21 blocable dans la position souhaitée dans la rainure 18 et une aile 22 qui traverse l'espace E subsistant entre les bords rabattus à joindre 12b ; l'aile 22 forme patte de fixation et comprend à cet effet un orifice 23 pour assembler un profilé, une traverse, une platine, etc.

La pièce 20 est maintenue en position dans la rainure 18 par des crans 24 prévus sur les flancs de la rainure ou par une vis 25 coopérant avec un trou taraudé 26 et engendrant un arc-boutement de l'aile 21 contre la face exteme des bords 12b. Le passage des crans pour changer la position de la pièce dans sa rainure 18 s'obtient par une élasticité des rebords latéraux de la partie 13a de la pièce 13 qui portent les crans et/ou de l'aile 21.

On notera que, pour accentuer la résistance à l'extraction de chaque pièce d'angle 13, le fond 11 de la boîte offre à chaque coin B une languette 11a munie d'ouvertures 11b recevant au surmoulage la partie de talon 14 de la pièce d'angle 13, les liens de matière étant ainsi assurés entre la partie arrière 14a du talon et sa partie avant 14b. Pour bien illustrer la simplicité de réalisation de la boîte selon l'invention, une moitié du flan de tôle qui sert de pièce de départ pour réaliser cette boîte est illustré sur la figure 2, après découpe et avant pliage.

## Revendications

1. Boîte industrielle pour éléments électriques, comprenant un fond (11) et des parois latérales (12) offrant un bord antérieur (12a) et des bords latéraux (12b), ainsi que des pièces d'angle (13) destinées à joindre les parois latérales (12b) de façon étanche et disposées sur leurs bords latéraux mutuellement en regard,
***caractérisée par le fait que** :*
- les bords latéraux (12b) des parois latérales (12) sont rabattus par rapport aux plans de ces parois,
- les pièces d'angle (13) sont surmoulées sur les bords rabattus, ceux-ci présentant des conformations qui permettent aux pièces d'angle de résister aux efforts d'extraction vers l'extérieur.

2. Boîte industrielle selon la revendication 1, **caractérisée par le fait que** les conformations de résistance aux efforts ménagées dans les bords rabattus (12b) des parois latérales (12) sont des ouvertures (12c) et que les pièces d'angle surmoulées (13) comportent une partie (13a) externe à la boîte, une partie (13b) interne à la boîte et des liaisons(13c) pénétrant dans les ouvertures et solidarisant la partie externe avec la partie interne.

3. Boîte industrielle selon la revendication 1, **caractérisée par le fait que** les bords en regard (12b) des parois latérales (12) sont rabattus à 45° et que la section droite des pièces d'angle (13) a une forme générale triangulaire.

4. Boîte industrielle selon la revendication 1, **caractérisée par le fait que** les pièces d'angle (13) comprennent une rainure (18) sensiblement parallèle aux bords rabattus (12b) des parois latérales (12), située du côté extérieur de ces bords et prévue pour recevoir des pièces de fixation (20).

5. Boîte industrielle selon la revendication 4, **caractérisée par le fait que** la rainure (18) et la pièce de fixation (20) comportent des moyens de blocage (24;25) autorisant un logement repositionnable de la pièce de fixation dans la rainure.

6. Boîte industrielle selon la revendication 1, **caractérisée par le fait que** les parois latérales (12) viennent d'une pièce avec le fond (11) de la boîte et que le fond présente aux coins (B) une languette (11a) munie d'ouvertures (11b) pour le passage de la matière moulée de la pièce d'angle (13).

## Patentansprüche

1. Industrieller Kasten für elektrische Bauteile mit einem Boden (11) und Seitenwänden (12), welche einen vorderen Rand (12a) und seitliche Ränder (12b) sowie Winkelstücke (13) umfassen, die dazu bestimmt sind, die Seitenwände (12) in dichter Weise zusammenzufügen, und die auf ihren Rändern jeweils gegenüberliegend angeordnet sind,
**dadurch gekennzeichnet dass**:
- die seitlichen Ränder (12b) der Seitenwände (12) bezogen auf die Flächen dieser Wände heruntergeklappt sind.
- die Winkelstücke (13) auf den heruntergeklappten Rändern aufgegossen sind, wobei diese Formangleichungen aufweisen, welche es den Winkelstücken ermöglichen, den nach außen wirkenden Ausziehkräften zu widerstehen.

2. Industrieller Kasten nach Anspruch 1, **dadurch gekennzeichnet, dass** die Formangleichungen zum Widerstand gegen die in den heruntergeklappten Rändern (12b) der Seitenwände (12) anstehenden Kräfte Öffnungen (12c) sind und dass die aufgegossenen Winkelstücke (13) einen äußeren Teil (13a) des Kastens, einen inneren Teil (13b) des Kastens sowie Verbindungen (13c) enthalten, die in die Öffnungen hineinragen und den äußeren Teil mit dem inneren Teil zusammenbringen.

3. Industrieller Kasten nach Anspruch 1, **dadurch gekennzeichnet, dass** die Ränder (12b) bezogen auf die Seitenwände (12) um 45° heruntergeklappt sind und dass der rechte Abschnitt der Winkelstücke (13) eine grundsätzlich dreieckige Form hat.

4. Industrieller Kasten nach Anspruch 1, **dadurch gekennzeichnet, dass** die Winkelstücke (13) eine Nut (18) enthalten, die in etwa parallel zu den heruntergeklappten Seiten (12b) der Seitenwände (12) liegt, welche auf der Außenseite dieser Ränder angeordnet und zur Aufnahme von Befestigungsteilen (20) vorgesehen ist.

5. Industrieller Kasten nach Anspruch 4, **dadurch gekennzeichnet, dass** die Nut (18) und das Befestigungsteil (20) Blockiermittel enthalten, die eine umplatzierbare Anordnung des Befestigungsteiles in der Nut ermöglicht.

6. Industrieller Kasten nach Anspruch 1, **dadurch gekennzeichnet, dass** die Seitenwände (12) zusammen mit dem Boden (11) des Kastens aus einem Teil gefertigt sind und dass der Boden an den Ecken (B) eine mit Öffnungen versehene Lasche (11a) zum Durchfluss des Gussmaterials des Winkelstücks (13) aufweist.

## Claims

1. Industrial box for electrical elements comprising a back panel (11) and side walls (12) forming a back edge (12a) and side edges (12b) and corner parts (13) that will join the side walls (12b) together in a leak tight manner and placed on their side edges facing each other,
**characterised in that**:
- the side edges (12b) of the side walls (12) are folded back from the planes of these walls,
- the corner parts (13) are insert moulded on the folded down edges, which are provided with shapes that enable corner parts to resist extraction forces towards the outside.

2. Industrial box according to claim 1, **characterised by** the fact that the shapes providing resistance to forces formed in the folded down edges (12b) of the side walls (12) are openings (12c), and that the insert moulded corner parts (13) comprise a part (13a) external to the box, a part (13b) internal to the box and connections (13c) penetrating into the openings and fixing the external part with the internal part.

3. Industrial box according to claim 1, **characterised by** the fact that the edges (12b) facing the side walls (12) are folded down to 45° and that the shape of the prismatic section of the corner parts (13) is generally triangular.

4. Industrial box according to claim 1, **characterised by** the fact that the corner parts (13) are provided with a groove (18) approximately parallel to the folded down edges (12b) of the side walls (12), located on the outside of these edges and designed to hold attachment parts (20).

5. Industrial box according to claim 4, **characterised by** the fact that the groove (18) and the attachment part (20) comprise locking means (24; 25) enabling a repositionable housing of the attachment part in the groove.

6. Industrial box according to claim 1, **characterised by** the fact that the side walls (12) and the bottom (11) of the box are all made from a single part, and that the bottom is provided with a tongue (11a) at the corners (B), openings (11b) being provided in the tongue to enable the moulded material of the corner part (13) to pass through.
